# EUROPÄISCHE PATENTSCHRIFT

(11) **EP 4 065 314 B1**
(45) Veröffentlichungstag und Bekanntmachung des Hinweises auf die Patenterteilung: **07.01.2026**
(21) Anmeldenummer: 20812002.2
(22) Anmeldetag: 23.11.2020
(51) Int. Cl.: B24D 15/04, B24D 3/00, B24D 11/00

(54) **SCHAUMSCHLEIFMITTEL UND VERFAHREN ZU DESSEN HERSTELLUNG**
FOAM ABRASIVE AND METHOD FOR PRODUCING SAME
ABRASIF SUR MOUSSE ET SON PROCÉDÉ DE PRODUCTION

(30) Priorität: 29.11.2019 DE 102019218560
(43) Veröffentlichungstag der Anmeldung: 05.10.2022
(73) Patentinhaber: Robert Bosch GmbH, 70442 Stuttgart (DE)
(72) Erfinder: DROST, Ruben, 8600 Dubendorf (CH); HUBER, Johannes, 78464 Konstanz (DE); LINDSAY, Steven, Derbyshire Derbyshire DE56 1DT (GB)
(86) Internationale Anmeldenummer: PCT/EP2020/083004
(87) Internationale Veröffentlichungsnummer: WO 2021/105030

(56) Entgegenhaltungen:
- WO-A2-2011/150326
- DE-A1- 102017 214 827
- US-A1- 2011 162 287

## Beschreibung

Die Erfindung betrifft ein Schaumschleifmittel zum schleifenden Bearbeiten eines Werkstücks sowie ein Verfahren zu dessen Herstellung.

### Stand der Technik

Schaumschleifmittel sind aus dem Stand der Technik prinzipiell bekannt, beispielsweise aus US 4887396 A. Diese Schleifartikel weisen den Vorteil auf, dass sie ihre Form während eines Schleifprozesses auf die Kontur eines zu schleifenden Gegenstands anpassen, indem der weiche Grundkörper aus Schaum elastisch verformt wird. Aus diesem Grund stellen Schaumschleifmittel die erste Wahl dar bei Schleifprozessen an nicht ebenen Gegenständen.

Aus der US 2011/0162287 A1 sind Schleifmittel und mittels einem Binder gebundene Schleifkörner bekannt.

Ferner ist die Verwendung von Deckbindern aus der Schleifmittelindustrie bekannt, insbesondere auch für Schaumschleifmittel. Gemäß aus dem Stand der Technik bekannten Schaumschleifmitteln ist die Verwendung eines Deckbinders in Kombination mit wasserbasierten oder lösemittelbasierten Bindemitteln bekannt.

Es besteht in der Schleifmittelindustrie ein ständiges Bedürfnis, die Haltbarkeit von Schleifartikeln, insbesondere von Schaumschleifmitteln, weiter zu erhöhen, bei gleichzeitiger Reduzierung von Umweltbelastung und Herstellungsaufwand.

### Offenbarung der Erfindung

Die Erfindung betrifft ein Schaumschleifmittel zum schleifenden Bearbeiten eines Werkstücks, umfassend einen Grundkörper aus Schaumstoff, insbesondere aus Polyurethan-Schaumstoff, sowie an zumindest einer Oberfläche des Schaumschleifmittels mittels eines Grundbinders aus thermoplastischem Polyurethan (TPU) fixierte Schleifkörner. Es wird vorgeschlagen, dass die Schleifkörner mit einem Deckbinder bedeckt sind.

Bei dem Schaumschleifmittel handelt es sich um einen Schleifartikel zur schleifenden Bearbeitung eines Gegenstands. Die schleifende Bearbeitung kann dabei in Form von Handschliff und/oder in Form eines maschinell ausgeführten Schliffs möglich sein. Der Ausdruck "schleifende Bearbeitung" schließt polierende Bearbeitung ein. Das Schaumschleifmittel, insbesondere der dem Schaumschleifmittel die wesentliche Gestalt verleihende Grundkörper, kann prinzipiell in unterschiedlichen Formen vorliegen, zum Beispiel als Block, als Scheibe, als Rolle, als Band, als Streifen oder dergleichen. Ferner ist denkbar, das Schaumschleifmittel derart in einen Handschuh zu integrieren, dass das Schaumschleifmittel die auf Seite der Handinnenfläche und der Fingerinnenflächen befindliche Oberfläche des Handschuhs bildet. Ferner kann das Schaumschleifmittel auch für den Einsatz mit Schleifmaschinen wie beispielsweise Exzenterschleifmaschinen hergestellt sein.

Der Grundkörper des Schaumschleifmittels umfasst zumindest einen Schaumstoff. Insbesondere kann der Schaumstoff porös und/oder luftdurchlässig sein. Ferner kann der Schaumstoff als ein geschlossenzelliger, ein offenzelliger oder ein gemischtzelliger Schaumstoff ausgebildet sein. Insbesondere ist der Schaumstoff flexibel und insbesondere elastisch verformbar. Der Grundkörper aus Schaumstoff verleiht dem Schaumschleifmittel seine wesentliche Gestalt und hinsichtlich Flexibilität und Stabilität, insbesondere hinsichtlich Elastizität, Dehnbarkeit, Stauchbarkeit, Scherbarkeit, Reiss- und Zugfestigkeit, spezifische Eigenschaften. Diese spezifischen Eigenschaften charakterisieren maßgeblich die Handhabbarkeit und die Eigenschaften des Schaumschleifmittels während eines Schleifprozesses. In einer Ausführungsform des Schaumschleifmittels kann der Grundkörper aus einem Polyurethan-Schaumstoff realisiert sein, insbesondere aus diesem bestehen. Polyurethan eignet sich vorteilhaft auf Grund guter Verarbeitbarkeit im Herstellverfahren, da Polyurethan eine vorteilhafte Härte und Reißfestigkeit aufweist. Alternativ kann der Grundkörper prinzipiell auch aus Ethylen-Vinylacetat-Copolymer (EVA), Polyethylen (PE), Polypropylen (PP), Acrylnitril-Butadien-Kautschuk (Nitrilkautschuk, AB oder NBR), Polystyren (PS), Polyurethan (PE) oder dergleichen realisiert sein.

Das Schaumschleifmittel weist an zumindest einer Oberfläche des Grundkörpers Schleifkörner auf. Die zumindest eine Oberfläche kann insbesondere als die gesamte Oberfläche des Grundkörpers gewählt sein. Alternativ kann die zumindest eine Oberfläche auch als ein Teil der gesamten Oberfläche des Grundkörpers gewählt sein. Unter einem Schleifkorn soll ein Element verstanden werden, das eine verformende und/oder abtragende Wirkung auf das den bearbeitenden Gegenstand, d.h. ein Werkstück, hat. Ein Schleifkorn kann dabei insbesondere aus einem mineralischen und/oder keramischen Material ausgebildet sein, beispielsweise aus Diamant, aus Korund, aus Siliciumcarbid, aus Bornitrid oder dergleichen. In einem Ausführungsbeispiel sind die Schleifkörner durch Aluminiumoxid-Partikel mit einer Partikelgröße zwischen 7 µm und 300 µm realisiert. Insbesondere kann das Schleifkorn jegliche, einem Fachmann als sinnvoll erscheinende geometrische Ausgestaltung aufweisen. Das Schleifkorn kann ein sogenanntes geformtes Schleifkorn oder ein gebrochenes Schleifkorn sein. Ein Schleifkorn verursacht an dem zu bearbeitenden Gegenstand eine Reibung und Temperaturentwicklung, die eine verformende und/oder abtragende Wirkung auf bzw. in den zu bearbeitenden Gegenstand aufbringt.

Bei dem Schaumschleifmittel haften die Schleifkörner mittels eines Grundbinders aus thermoplastischem Polyurethan (TPU) auf der zumindest einen Oberfläche des Grundkörpers. Mit dem Grundbinder werden die Schleifkörner, insbesondere in einer gewünschten Stellung und Verteilung, auf dem Grundkörper festgeklebt und somit fixiert. Der Grundbinder dient ferner dazu, dem Schaumschleifmittel an dessen zumindest einer Oberfläche spezifische Eigenschaften hinsichtlich Haftung, Dehnung, Reiss- und Zugfestigkeit, Flexibilität und Stabilität zu verleihen. Der Begriff "Grundbinder aus thermoplastischem Polyurethan" umfasst dabei sämtliche thermoplastische Elastomere auf Urethanbasis und bezeichnet einen lösemittelfreien Klebstoff. Der Grundbinder ist ein Schmelzklebstoff, der lösemittelfrei verarbeitbar und aufgetragbar ist. Unter einem "Schmelzklebstoff" ist dabei insbesondere ein lösungsmittelfreier Heißklebstoff zu verstehen, der bei Raumtemperatur im Wesentlichen fest ist, im erhitzten Zustand verflüssigt auftragbar, insbesondere gießbar oder schmierbar, ist und beim Abkühlen wieder eine feste Verbindung herstellt.

Typischerweise werden bei Schaumschleifmitteln Kanten des Schaumschleifmittels besonders stark während eines Schleifprozesses beansprucht, sodass dort befindliche Schleifkörner hohen Belastungen ausgesetzt sind. In Folge dieser Belastungen werden Schleifkörner - teilweise samt angrenzendem Schaumstoffmaterial des Grundkörpers - an den Kanten besonders schnell aus dem Grundbinder gelöst und stehen folglich im weiteren Schleifprozess nicht mehr zur Verfügung. Ferner kommt es vor, dass derart gelöste Schleifkörner ungewollte Kratzer oder Riefen in die Oberfläche eines zu schleifenden Gegenstands einbringen, da sie unkontrolliert zwischen dem Gegenstand und dem Schaumschleifmittel während des Schleifprozesses bewegt werden. Die beschriebene Degradierung der Kanten führt typischerweise zu einem vorzeitigen Ende der Nutzung eines Schaumschleifmittels, obgleich die ebenen Oberflächenbereiche des Grundkörpers meist noch für weitere Verwendung in Schleifprozessen nutzbar wären.

Der vorliegenden Erfindung liegt die Erkenntnis zu Grunde, dass basierend auf der Verwendung des Grundbinders aus thermoplastischem Polyurethan das Bedecken der Schleifkörner mit einem zusätzlichen Deckbinder die Anbindung der Schleifkörner an den Grundkörper in unerwartetem Maße verbessert. Deckbinder sind aus dem Stand der Technik bekannt, beispielsweise aus WO 13014116 A1 für beschichtete Schleifartikel wie Schleifscheiben. Experimente zeigen jedoch, dass die Kombination des Grundbinders aus thermoplastischem Polyurethan mit einem Deckbinder die Schleifkörner des Schaumschleifmittels zusätzlich in besonders vorteilhafter Weise am Grundkörper fixieren, sodass die zuvor genannten negativen Effekte deutlich reduziert oder ganz vermieden werden können. Ferner können eine Standzeit (Vewendungsdauer) des Schaumschleifmittels signifikant erhöht und ein Gesamtabtrag durch das Schaumschleifmittel gesteigert werden. Auch eine bewirkte Oberflächengüte des bearbeiteten Gegenstands kann vorteilhaft erhöht werden.

In einer Ausführungsform des Schaumschleifmittels ist der Deckbinder als ein reaktiver Einkomponenten-Klebstoff realisiert. Unter einem reaktiven Klebstoff ist insbesondere ein Bindemittel zu verstehen, dass durch chemische Reaktion eine Anbindung des Bindemittels an ein Schleifkorn bewirkt. In einer Ausführungsform kann der Einkomponenten-Klebstoff beispielsweise als ein UV-härtender Klebstoff realisiert sein. Insbesondere kann der Einkomponenten-Klebstoff ein Schmelzklebstoff sein. Insbesondere stellt der Schmelzklebstoff einen Stoff aus einer Liste von Klebstoffen dar, die zumindest Polymere wie Polyamide, Polyethylen, amorphe Polyalphaolefine, Ethylenvinylacetat-Copolymere, Polyester-Elastomere, Polyurethan-Elastomere, Copolyamid-Elastomere oder Vinylpyrrolidon/VinylacetatCopolymere, sowie Harze wie Kolophonium, Terpene, Kohlenwasserstoffharze, und natürliche oder synthetische Wachse umfasst. Beispielsweise kann ein reaktiver Schmelzklebstoff zunächst erhitzt und dabei geschmolzen werden, aufgetragen werden und anschließend während seines Abkühlens wieder erstarren. Neben der mechanischen Bindung der Schleifkörner im Rahmen eines Kraftschlusses und/oder eines Formschlusses erfolgt ferner vorteilhaft eine chemische Anbindung durch einen Stoffschluss. Beispielsweise können in dem Schmelzklebstoff vorgesehene isocyanathaltige Ketten nach Verarbeitung innerhalb einiger Zeit, typischerweise innerhalb von Tagen, Feuchtigkeit aus Umgebungsluft aufnehmen und somit chemisch reagieren und vernetzen. Folglich ist ein derartiges reaktives Bindemittel nicht wieder aufschmelzbar.

In einer Ausführungsform des Schaumschleifmittels ist der Deckbinder als ein Zweikomponenten-Klebstoff realisiert. Unter einem Zweikomponenten-Klebstoff ist insbesondere ein Bindemittel zu verstehen, der seine Klebeigenschaften auf Grund einer chemischen Reaktion erhält, die zumindest teilweise durch Mischen der zwei Komponenten ausgelöst wird. Die beiden Komponenten reagieren miteinander, sodass die gewünschten Klebeigenschaften des Zweikomponenten-Klebstoffs resultieren. In einer Ausführungsform ist der Zweikomponenten-Klebstoff als ein Polyurethan-basierter Zweikomponenten-Klebstoff gewählt. Ein Polyurethan-basierter Zweikomponenten-Klebstoff kann beispielsweise Isocyanat, Polyol (Diol, Triol, ...) umfassen. Beispielhaft könnte ein Polyurethan-basierter Zweikomponenten-Klebstoff der Firma Huntsman (Vitrox ABR 7400) mit einem Mischungsverhältnis von 50 zu 50 gewählt sein. Es wurde gefunden, dass ein Polyurethan-basierter Zweikomponenten-Klebstoff auf Grund seiner hohen Temperaturfestigkeit die Struktur an der Oberfläche derart stabilisiert, dass die Schleifkörner auch unter Einfluss erhöhter Kräfte und/oder erhöhter Temperaturen von bis zu 200 °C - wie sie im Schleifprozess leicht auftreten können - sicher auf dem Schaumschleifmittel gehalten und fixiert werden. Ferner scheint ein derartiger Polyurethan-basierter Zweikomponentenklebstoff eine besonders starke Anbindung an den Grundbinder aus thermoplastischem Polyurethan auszubilden, wobei die Anbindung vorteilhafte elastische Eigenschaften bezogen auf die gebildete Schicht des Deckbinders aufweist. In einer Ausführungsform des Schaumschleifmittels ist der Deckbinder als ein Acrylat-Klebstoff, ein Metacrylat-Klebstoff, ein Epoxid-Klebstoff oder ein Klebstoff auf Basis eine radikal vernetzenden Ethylen-Vinylacetat-Copolymers (EVA) realisiert.

In einer Ausführungsform des Schaumschleifmittels weist der Deckbinder ein Flächengewicht zwischen 10 g/m2 und 80 g/m2, insbesondere zwischen 20 g/m2 und 40 g/m2, ganz insbesondere zwischen 25 g/m2 und 35 g/m2, auf. Das Flächengewicht kann dabei in Abhängigkeit der vorliegenden Größe der Schleifkörner unterschiedliche gewählt sein. Die vorgeschlagenen Flächengewichte erlauben, eine vorteilhafte Stabilisierung der Schleifkörner an der Oberfläche des Grundkörpers zu realisieren bei gleichzeitig vorteilhaft dünner Ausprägung der aufgetragenen Schicht an Deckbinder.

In einer Ausführungsform des Schaumschleifmittels weist der Deckbinder eine Shore-D-Härte gemäß DIN 53505 zwischen 30 und 90, insbesondere zwischen 60 und 80, ganz insbesondere zwischen 65 und 75, auf. Zur Ermittlung einer Shore-D-Härte wird als ein Indenter ein Kegelstumpf mit einer kugelförmigen Spitze mit einem Radius von 0,1 ± 0,01 mm und einem Öffnungswinkel von 30 ± 1° benutzt. Bei dem SHORE-D-Härteprüfverfahren wird in Verbindung mit einem Messständer eine Zusatzeinrichtung zur Erhöhung der Präzision eingesetzt, die den zu vermessenden Prüfkörper mit einer Anpresskraft von 50 ± 0,5 N stoßfrei auf die Auflage des Messtisches drückt. Die Skala der Shore-D-Härte reicht dabei von 0 Shore (entsprechend einer Eindringtiefe von 2,5 mm) bis 100 SHORE (entsprechend einer Eindringtiefe von 0 mm). Dabei entspricht der Skalenwert 0 dem maximal möglichen Eindruck, d.h. der Werkstoff setzt dem Eindringen des Indenters keinen Widerstand entgegen. Dagegen entspricht der Skalenwert 100 einem sehr hohen Widerstand des Werkstoffs gegenüber dem Eindringen und es wird praktisch kein Eindruck erzeugt. Insbesondere ermöglicht es eine Härte des Deckbinders wie vorgeschlagen, die Stabilität der sich ausbildenden Deckschicht, in der die Schleifkörner eingebettet und somit fixiert sind, vorteilhaft auszuprägen. Es sei angemerkt, dass die Härte des Deckbinders an einer separaten Schicht des Deckbinders ermittelt werden kann.

In einer Ausführungsform des Schaumschleifmittels weist der Deckbinder eine Zugfestigkeit, insbesondere eine Reißfestigkeit (tensile strength), zwischen 5 MPa und 65 MPa auf, insbesondere zwischen 20 MPa und 60 MPa, ganz insbesondere zwischen 40 MPa und 55 MPa, auf. Vorteilhaft weist die mit einer derart ausgestalteten Zugfestigkeit ausgebildete Schicht an Deckbinder eine hohe Stabilität auf, sodass auch unter tatsächlichen Bedingungen eines Schleifprozesses ein Ausreißen von Schleifkörnern sowie Schaumstoffmaterial aus dem Grundkörper vermieden werden kann. Es sei angemerkt, dass die Zugfestigkeit, insbesondere die Reißfestigkeit, des Deckbinders an einer separaten Schicht des Deckbinders ermittelt werden kann.

In einer Ausführungsform des Schaumschleifmittels weist der Deckbinder eine Bruchdehnung (Streckgrenze, "strain to failure") von mehr als 3 %, insbesondere von mehr als 10 %, ganz insbesondere von mehr als 15 %, auf. Die Bruchdehnung kennzeichnet dabei die prozentuale Ausdehnung des Deckbinders (in Form einer Schicht), bevor sie bricht bzw. reißt. Vorteilhaft kann derart erreicht werden, dass die auf der Oberfläche des Grundkörpers gebildete Schicht von Deckbinder eine hohe Elastizität aufweist, sodass selbst unter Einwirkung starker Kräfte, insbesondere Scherkräfte und/oder Stauchkräfte und/oder Torsionskräfte, eine reversible Materialverformung erfolgen kann, bei der Schleifkörner und/oder Schaumstoffmaterial sicher in bzw. am Grundkörper gehalten werden kann. Es sei angemerkt, dass die Bruchdehnung typischerweise an einer separaten Schicht des Deckbinders ermittelt werden kann, wobei die vorgeschlagenen Werte sich auf Messergebnisse bei 25 °C an einer 2 mm dicken Schicht des Deckbinders beziehen.

In einem weiteren Aspekt der Erfindung wird ein Verfahren zur Herstellung des erfindungsgemäßen Schaumschleifmittels vorgeschlagen, das Verfahren umfassend zumindest die Verfahrensschritte:
- Bereitstellen eines Grundkörpers aus Schaumstoff, insbesondere aus Polyurethan-Schaumstoff,
- Beschichten des Grundkörpers an der Oberfläche mit Grundbinder aus thermoplastischem Polyurethan (TPU),
- Aufbringen von Schleifkörnern auf die Oberfläche und Fixieren mittels des Grundbinders,
- Aufbringen von Deckbinder, wobei der Deckbinder die Schleifkörner und den Grundbinder bedeckt.

In einer Ausführungsform des Verfahrens wird der Deckbinder aufgesprüht und anschließend ausgehärtet. In einer Ausführungsform des Verfahrens weist der Deckbinder dabei (insbesondere vor dem Aufsprühen) eine Viskosität zwischen 150 mPa.s und 8000 mPa.s auf, insbesondere zwischen 200 mPa.s und 4000 mPa.s. Alternativ oder zusätzlich kann der Deckbinder auch in Form von pulverförmigem, insbesondere thermoplastischem Polyurethan-basiertem, Material auf die Oberfläche des Schaumschleifmittels aufgebracht werden und anschließend in einem Unterverfahrensschritt durch Wärmezufuhr aufgeschmolzen werden. Das Aushärten des Deckbinders kann durch Wärmezufuhr oder, alternativ oder zusätzlich, chemisch induziert oder UV-Licht induziert erfolgen. Insbesondere kann gemäß erfindungsgemäßem Verfahren das erfindungsgemäße Schaumschleifmittel in wirtschaftlich vorteilhafter Weise schnell und mit wenig Arbeitsschritten hergestellt werden. Die Verwendung eines Polyurethan-basierten Zweikomponentenklebstoff ermöglicht es, besonders kurze Zeiten für den Verfahrensschritt des Aushärtens unter Wärmeeinfluss zu erreichen.

Folglich kann ein Schaumschleifmittel sowie ein Verfahren zu dessen Herstellung angegeben werden, wobei das Schaumschleifmittel eine höhere Abtragsrate von

Material, eine längere Standzeit, weniger Bildung von Kratzern und Riefen auf der Oberfläche des zu schleifenden Gegenstands sowie stärkere Kanten aufweist.

### Zeichnungen

Die Erfindung ist anhand von in den Zeichnungen dargestellten Ausführungsbeispielen in der nachfolgenden Beschreibung näher erläutert. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Gleiche Bezugszeichen in den Figuren bezeichnen gleiche Elemente.

Es zeigen:
- Figur 1: einen Ausschnitt aus einer schematischen Schnittdarstellung eines Ausführungsbeispiels des erfindungsgemäßen Schaumschleifmittels;
- Figur 2: ein Ausführungsbeispiel eines Verfahrens zur Herstellung eines erfindungsgemäßen Schaumschleifmittels.

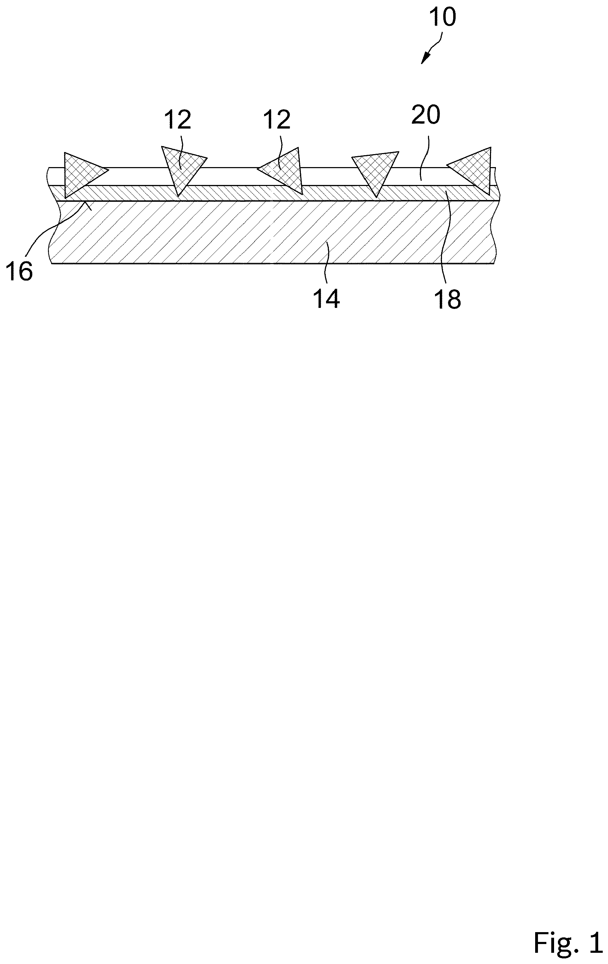

Figur 1 zeigt einen Ausschnitt aus einem beispielhaften Ausführungsbeispiel eines erfindungsgemäßen Schaumschleifmittels 10 mit Schleifkörnern 12 in einer schematischen Schnittdarstellung. Das Schaumschleifmittel 10 weist in der dargestellten Ausführungsform einen Grundkörper 14 in Form einer Scheibe auf, auf dessen gesamter Oberfläche 16 Schleifkörner 12 angeordnet sind. Der Grundkörper 14 weist im Querschnitt eine Dicke von 24 mm auf. Der Grundkörper 14 besteht aus einem Polyurethan-Schaumstoff mit einer offenporigen Struktur. Die Oberfläche des Grundkörpers 14 weist eine Rauigkeit von weniger als 2,0 µm auf (hier nicht näher vergrößert dargestellt). Die Schleifkörner 12 sind mittels eines Grundbinders 18 aus thermoplastischem Polyurethan (TPU) an der Oberfläche 16 des Grundkörpers 14 fixiert. Ferner ist über die derart gebildete Schicht aus Grundbinder 18 und Schleifkörnern 12 eine Schicht aus Deckbinder 20 aufgetragen, die die Schleifkörner 12 bedeckt. Der Deckbinder 20 ist als Zweikomponenten-Klebstoff auf Polyurethan-Basis realisiert. Der Deckbinder 20 ist mit einem Flächengewicht von 30 g/m2 auf die mit Grundbinder 18 beschichtete Oberfläche 16 des Grundkörpers 14 aufgetragen. Der Deckbinder 20 weist - gemessen an einer Schicht aus Deckbinder (hier nicht näher dargestellt) - eine Härte von 30 auf sowie eine Zugfestigkeit von 40 MPa auf. Die Bruchdehnung des Deckbinders 20 - gemessen an einer separaten, 2 mm dicken Schicht des Deckbinders 20 bei 25 °C - beträgt 5 %.

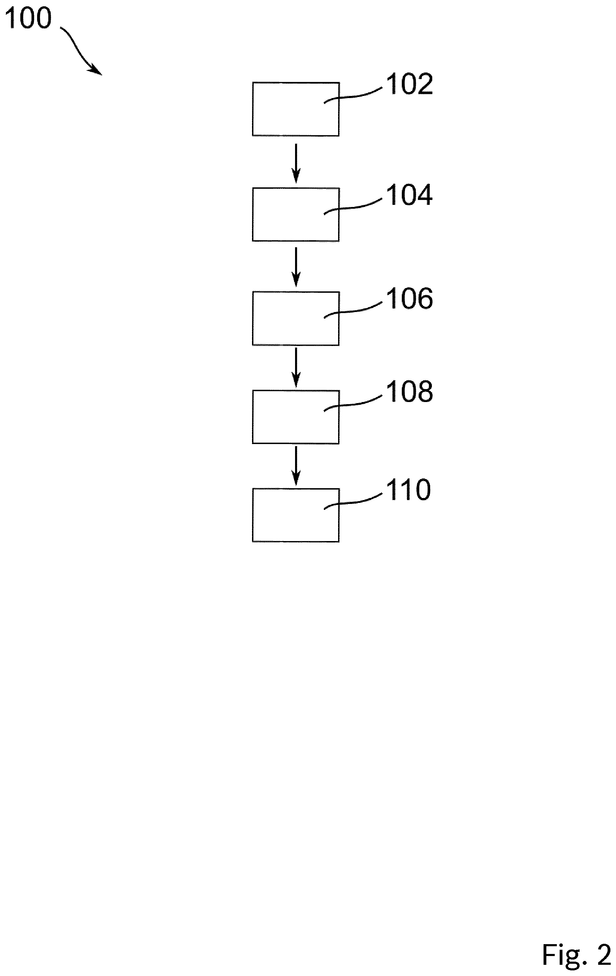

Das erfindungsgemäße Schaumschleifmittel 10 kann mittels eines in Figur 2 dargestellten Herstellverfahrens 100 hergestellt werden:
- Verfahrensschritt 102: Bereitstellen eines Grundkörpers 14 aus Schaumstoff, insbesondere aus Polyurethan-Schaumstoff,
- Verfahrensschritt 104: Beschichten des Grundkörpers 14 an der Oberfläche 16 mit Grundbinder 18 aus thermoplastischem Polyurethan (TPU), beispielsweise mit den oben genannten Parametereinstellungen,
- Verfahrensschritt 106: Aufbringen von Schleifkörnern 12 auf die Oberfläche 16 und Fixieren mittels des Grundbinders 18,
- Verfahrensschritt 108: Aufbringen - hier insbesondere Aufsprühen - von Deckbinder 20, wobei der Deckbinder 20 vor dem Sprühen eine Viskosität von 1000 mPa.s aufweist, derart, dass der aufgebrachte Deckbinder 20 die Schleifkörner 12 und den Grundbinder 18 bedeckt,
- Verfahrensschritt 110: Härten der erzeugten Schicht des Deckbinders 20 unter Wärmezufuhr von 170 °C für eine Dauer von 20 Sekunden.

## Patentansprüche

1. Schaumschleifmittel (10) zum schleifenden Bearbeiten eines Werkstücks, umfassend einen Grundkörper (14) aus Schaumstoff, insbesondere aus Polyurethan-Schaumstoff, **gekennzeichnet durch** an zumindest einer Oberfläche (16) des Schaumschleifmittels mittels eines Grundbinders (18) aus thermoplastischem Polyurethan (TPU) fixierte Schleifkörner (12), welche mit einem Deckbinder (20) bedeckt sind.

2. Schaumschleifmittel (10) nach Anspruch 1, **dadurch gekennzeichnet, dass** der Deckbinder (20) als ein reaktiver Einkomponenten-Klebstoff realisiert ist.

3. Schaumschleifmittel (10) nach Anspruch 1, **dadurch gekennzeichnet, dass** der Deckbinder (20) als ein Zweikomponenten-Klebstoff realisiert ist.

4. Schaumschleifmittel (10) nach einem der vorhergehenden Ansprüche, **dadurch gekennzeichnet, dass** der Deckbinder (20) als ein Acrylat-Klebstoff, Metacrylat-Klebstoff, Epoxid-Klebstoff oder als ein Klebstoff auf Basis eines radikalen vernetzenden Ethylen-Vinylacetat-Copolymers realisiert ist.

5. Schaumschleifmittel (10) nach einem der vorhergehenden Ansprüche, **dadurch gekennzeichnet, dass** der Deckbinder (20) ein Flächengewicht zwischen 10 g/m2 und 80 g/m2 aufweist, insbesondere zwischen 20 g/m2 und 40 g/m2 aufweist, ganz insbesondere zwischen 25 g/m2 und 35 g/m2 aufweist.

6. Schaumschleifmittel (10) nach einem der vorhergehenden Ansprüche, **dadurch gekennzeichnet, dass** der Deckbinder (20) eine Härte zwischen 30 und 90 aufweist, insbesondere zwischen 60 und 80 aufweist, ganz insbesondere zwischen 65 und 75 aufweist.

7. Schaumschleifmittel (10) nach einem der vorhergehenden Ansprüche, **dadurch gekennzeichnet, dass** der Deckbinder (20) eine Zugfestigkeit, insbesondere eine Reißfestigkeit, zwischen 5 MPa und 65 MPa aufweist, insbesondere zwischen 20 MPa und 60 MPa, ganz insbesondere zwischen 40 MPa und 55 MPa aufweist.

8. Schaumschleifmittel (10) nach einem der vorhergehenden Ansprüche, **dadurch gekennzeichnet, dass** der Deckbinder (20) eine Bruchdehnung von mehr als 3 % aufweist, insbesondere von mehr als 10 % aufweist, ganz insbesondere von mehr als 15 % aufweist.

9. Verfahren zur Herstellung eines Schaumschleifmittels (10) nach einem der
vorhergehenden Ansprüche, **gekennzeichnet durch** zumindest die Verfahrensschritte:
• Bereitstellen eines Grundkörpers (14) aus Schaumstoff, insbesondere aus Polyurethan-Schaumstoff,
• Aufbringen von Schleifkörnern (12) auf die Oberfläche (16) und Fixieren mittels des Grundbinders (18),
• Aufbringen von Deckbinder (20), wobei der Deckbinder (20) die Schleifkörner (12) und den Grundbinder (18) bedeckt,
**gekennzeichnet durch**
• Beschichten des Grundkörpers (14) an der Oberfläche (16) mit Grundbinder (18) aus thermoplastischem Polyurethan (TPU).

10. Verfahren nach Anspruch 9, **dadurch gekennzeichnet, dass** der Deckbinder (20) aufgesprüht und anschließend ausgehärtet wird.

11. Verfahren nach einem der Ansprüche 9-10, **dadurch gekennzeichnet, dass** der Deckbinder (20) eine Viskosität (bei 25 °C) zwischen 150 mPa.s znd 8000 mPa.s aufweist, insbesondere zwischen 200 mPa.s und 4000 mPa.s aufweist.

## Claims

1. Foam abrasive (10) for abrasive working of a workpiece, comprising a main body (14) of foam, more particularly of polyurethane foam, **characterized by** abrasive grains (12) which are affixed on at least one surface (16) of the foam abrasive by means of a make coat (18) of thermoplastic polyurethane (TPU) and are covered with a size coat (20).

2. Foam abrasive (10) according to Claim 1, **characterized in that** the size coat (20) is realized as a reactive one-component adhesive.

3. Foam abrasive (10) according to Claim 1, **characterized in that** the size coat (20) is realized as a two-component adhesive.

4. Foam abrasive (10) according to any of the preceding claims, **characterized in that** the size coat (20) is realized as an acrylate adhesive, methacrylate adhesive or epoxy adhesive or as an adhesive based on a radical crosslinking ethylene-vinyl acetate copolymer.

5. Foam abrasive (10) according to any of the preceding claims, **characterized in that** the size coat (20) has a surface weight of between 10 g/m² and 80 g/m², more particularly between 20 g/m² and 40 g/m², very particularly between 25 g/m² and 35 g/m².

6. Foam abrasive (10) according to any of the preceding claims, **characterized in that** the size coat (20) has a hardness of between 30 and 90, more particularly between 60 and 80, very particularly between 65 and 75.

7. Foam abrasive (10) according to any of the preceding claims, **characterized in that** the size coat (20) has a tensile strength, more particularly an ultimate tensile strength, of between 5 MPa and 65 MPa, more particularly between 20 MPa and 60 MPa, very particularly between 40 MPa and 55 MPa.

8. Foam abrasive (10) according to any of the preceding claims, **characterized in that** the size coat (20) has an elongation at break of more than 3%, more particularly of more than 10%, very particularly of more than 15%.

9. Method for producing a foam abrasive (10) according to any of the preceding claims, **characterized by** at least the method steps of:
• providing a main body (14) of foam, more particularly of polyurethane foam,
• applying abrasive grains (12) to the surface (16) and affixing them by means of the make coat (18),
• applying size coat (20), with the size coat (20) covering the abrasive grains (12) and the make coat (18),
**characterized by**
• coating the main body (14) on the surface (16) with make coat (18) of thermoplastic polyurethane (TPU).

10. Method according to Claim 9, **characterized in that** the size coat (20) is applied by spraying and then cured.

11. Method according to any of Claims 9 - 10, **characterized in that** the size coat (20) has a viscosity (at 25°C) of between 150 mPa.s and 8000 mPa.s, more particularly between 200 mPa.s and 4000 mPa.s.

## Revendications

1. Abrasif sur mousse (10) permettant de meuler une pièce, comprenant une partie principale (14) en mousse, en particulier une mousse de polyuréthane, **caractérisé en ce que** des grains abrasifs (12) sont fixés à au moins une surface (16) de l'abrasif sur mousse au moyen d'un liant de base (18) en polyuréthane thermoplastique (TPU), lesquels grains sont recouverts d'un liant de recouvrement (20).

2. Abrasif sur mousse (10) selon la revendication 1, **caractérisé en ce que** le liant de recouvrement (20) est réalisé sous la forme d'un adhésif réactif à un composant.

3. Abrasif sur mousse (10) selon la revendication 1, **caractérisé en ce que** le liant de recouvrement (20) est réalisé sous la forme d'un adhésif à deux composants.

4. Abrasif sur mousse (10) selon l'une des revendications précédentes, **caractérisé en ce que** le liant de recouvrement (20) est réalisé sous la forme d'un adhésif à base d'acrylate, d'un adhésif à base de méthacrylate, d'un adhésif époxy ou sous la forme d'un adhésif à base d'un copolymère d'éthylène-acétate de vinyle à réticulation radicalaire.

5. Abrasif sur mousse (10) selon l'une des revendications précédentes, **caractérisé en ce que** le liant de recouvrement (20) présente un grammage compris entre 10 g/m2 et 80 g/m2, en particulier entre 20 g/m2 et 40 g/m2, et tout particulièrement entre 25 g/m2 et 75 g/m2.

6. Abrasif sur mousse (10) selon l'une des revendications précédentes, **caractérisé en ce que** le liant de recouvrement (20) présente une dureté comprise entre 30 et 90, en particulier entre 60 et 80, et tout particulièrement entre 65 et 75.

7. Abrasif sur mousse (10) selon l'une des revendications précédentes, **caractérisé en ce que** le liant de recouvrement (20) présente une résistance à la traction, en particulier une résistance à la déchirure, comprise entre 5 MPa et 65 MPa, en particulier entre 20 MPa et 60 MPa, et tout particulièrement entre 40 MPa et 55 MPa.

8. Abrasif sur mousse (10) selon l'une des revendications précédentes, **caractérisé en ce que** le liant de recouvrement (20) présente un allongement à la rupture de plus de 3 %, en particulier de plus de 10 %, et tout particulièrement de plus de 15 %.

9. Procédé pour la production d'un abrasif sur mousse (10) selon l'une des revendications précédentes, **caractérisé par** au moins les étapes de procédé qui comprennent :
• la fourniture d'une partie principale (14) en mousse, en particulier en mousse de polyuréthane,
• l'application de grains abrasifs (12) sur la surface (16) et leur fixation au moyen du liant de base (18),
• l'application d'un liant de recouvrement (20), le liant de recouvrement (20) recouvrant les grains abrasifs (12) et le liant de base (18),
• le revêtement de la partie principale (14) sur la surface (16) avec un liant de base (18) en polyuréthane thermoplastique (TPU).

10. Procédé selon la revendication 9, **caractérisé en ce que** le liant de recouvrement (20) est pulvérisé puis durci.

11. Procédé selon l'une des revendications 9 à 10, **caractérisé en ce que** le liant de recouvrement (20) présente une viscosité (à 25 °C) comprise entre 150 mPa.s et 8000 mPa.s, en particulier entre 200 mPa.s et 4000 mPa.s.
